# EUROPÄISCHE PATENTSCHRIFT

(11) **EP 3 042 062 B1**
(45) Veröffentlichungstag und Bekanntmachung des Hinweises auf die Patenterteilung: **06.04.2022**
(21) Anmeldenummer: 14805484.4
(22) Anmeldetag: 02.09.2014
(51) Int. Cl.: F02D 41/00, F02D 41/14, G01M 15/11

(54) **VERFAHREN ZUM BETREIBEN EINER BRENNKRAFTMASCHINE**
METHOD OF CONTROLLING AN INTERNAL COMBUSTION ENGINE
PROCÉDÉ DE CONTRÔLE D'UN MOTEUR À COMBUSTION INTERNE

(30) Priorität: 04.09.2013 DE 102013014674
(43) Veröffentlichungstag der Anmeldung: 13.07.2016
(73) Patentinhaber: Döring, Andreas, 82008 Unterhaching (DE)
(72) Erfinder: DÖRING, Andreas, 82008 München/Unterhaching (DE); AUER, Matthias, 80337 München (DE)
(74) Vertreter: Liebl, Thomas
(86) Internationale Anmeldenummer: PCT/EP2014/002374
(87) Internationale Veröffentlichungsnummer: WO 2015/032487

(56) Entgegenhaltungen:
- EP-A1- 0 466 849
- EP-A1- 2 058 495
- WO-A1-90/02874
- WO-A1-90/06432
- AT-A4- 506 085
- DE-A1- 2 528 785
- DE-B3-102006 016 020
- US-A- 5 651 353
- US-B1- 7 031 828
- LI ET AL: "Real time NO emissions measurement during cold start in LPG SI engine", ENERGY CONVERSION AND MANAGEMENT, ELSEVIER SCIENCE PUBLISHERS, OXFORD, GB, Bd. 48, Nr. 9, 28. Juli 2007 (2007-07-28), Seiten 2508-2516, XP022174630, ISSN: 0196-8904, DOI: 10.1016/J.ENCONMAN.2007.04.002

## Beschreibung

Die Erfindung betrifft ein Verfahren zum Betreiben einer Brennkraftmaschine mit mehreren Zylindern, nämlich ein Verfahren zur zylinderindividuellen Detektion von Zündaussetzern.

Brennkraftmaschinen müssen immer strengere Emissionsgrenzwerte erfüllen. Eine Möglichkeit, solche Emissionsgrenzwerte zu erfüllen, besteht darin, den Betrieb der Brennkraftmaschine über eine Regelung zu optimieren. Dabei ist es auch schon bereits bekannt, an einer Brennkraftmaschine die einzelnen Zylinder der Brennkraftmaschine individuell zu regeln. Eine andere Möglichkeit, solche Emissionsgrenzwerte zu erfüllen, besteht darin, dass Abgas der Brennkraftmaschine über ein Abgasnachbehandlungssystem zu führen, um Emissionen von Abgasbestandteilen wie Ruß, CO, NOx oder Kohlenwasserstoffen zu reduzieren.

Aus der Praxis bekannte Abgasnachbehandlungssysteme weisen eine hohe Oxidationsfähigkeit für Kohlenwasserstoffe auf. Da die Oxidation von Kohlenwasserstoffen exotherm verläuft, kann es bei zu hohen Kohlenwasserstoffkonzentrationen im Abgas zu einer thermischen Schädigung des Abgasnachbehandlungssystems kommen.

Hohe Kohlenwasserstoffkonzentrationen im Abgas, die zu einer thermischen Schädigung eines Abgasnachbehandlungssystems führen, können zum Beispiel durch Zündaussetzer an Zylindern der Brennkraftmaschine verursacht werden, da bei solchen Zündaussetzern der in diese Zylinder eingebrachte Kraftstoff unverbrannt in das Abgasnachbehandlungssystem gelangt. In diesem Fall besteht eine besonders hohe Beschädigungsgefahr für das Abgasnachbehandlungssystem.

Besonders kritisch sind derartige Zündaussetzer an Gasmotoren, die im Bereich des Abgasnachbehandlungssystems Oxidationskatalysatoren wie z. B. CH₄-Oxidationskatalysatoren oder CH₂O-Oxidationskatalysatoren aufweisen. Derartige Oxidationskatalysatoren sind bei Zündaussetzern an den Zylindern eines Gasmotors einer besonders hohen Beschädigungsgefahr ausgesetzt. Es ist daher von Bedeutung, Zündaussetzer an Zylindern einer Brennkraftmaschine zu detektieren.

Aus der DE 25 28 785 A1 ist eine Vorrichtung bekannt, mit Hilfe derer Fehlzündungen an einer Brennkraftmaschine festgestellt werden können. Dabei kommen Temperatursensoren zum Einsatz. Temperatursensoren sind jedoch nicht in der Lage, sporadisch auftretende Zündaussetzer sicher zu detektieren, da die thermische Trägheit von Temperatursensoren zu groß ist. Vielmehr können Temperatursensoren nur dazu verwendet werden, um einen permanent ausgefallenen Zylinder zu erkennen. Gerade bei sporadischen Zündaussetzern an Zylindern einer Brennkraftmaschine kann es jedoch im Bereich eines Abgasnachbehandlungssystems zu hohen Temperaturanstiegen an Katalysatoren des Abgasnachbehandlungssystems kommen, die zu einer Schädigung derselben führen. Daher ist es von Wichtigkeit, auch sporadische Zündaussetzer sicher und zuverlässig zu detektieren.

WO 90/02874 A1 offenbart eine Brennkraftmaschine mit mehreren Zylindern, wobei stromaufwärts eines Katalysators und stromabwärts des Katalysators jeweils ein Abgassensor angeordnet ist. Der vom stromaufwärts des Katalysators positionierten Abgassensor erfasste Abgasistwert wird mit dem vom stromabwärts des Katalysators positionierten Abgassensor erfassten Abgasistwert verglichen.

EP 0 466 849 A1 offenbart ein Verfahren zum Zuordnen von Verbrennungsfehlern zu einem Zylinder einer Brennkraftmaschine.

US 7 031 828 B1, US 5 651 353 A, AT 506 085 A4 und EP 2 058 495 A1 offenbaren weiteren Stand der Technik.

Hiervon ausgehend liegt der vorliegenden Erfindung die Aufgabe zugrunde, ein neuartiges Verfahren zum Betreiben einer Brennkraftmaschine zu schaffen, mit Hilfe dessen die Detektion von Zündaussetzern verbessert werden kann. Diese Aufgabe wird durch ein Verfahren zum Betreiben einer Brennkraftmaschine nach Anspruch 1 gelöst.

Erfindungsgemäß wird mit Hilfe mindestens eines Abgassensors an dem Abgas jedes Zylinders der Brennkraftmaschine für den jeweiligen Zylinder individuell mindestsens ein Abgasistwert messtechnisch erfasst und der jeweilige messtechnisch erfasste Abgasistwert mit einem Abgassollwert verglichen, um für jeden der Zylinder mindestens eine zylinderindividuelle Abweichung zwischen dem Abgassollwert und dem Abgasistwert zu ermitteln, und wobei für jeden Zylinder auf Grundlage der oder jeder zylinderindividuellen Abweichung individuell bestimmt wird, ob am jeweiligen Zylinder Zündaussetzer vorliegen.

Mit der vorliegenden Erfindung wird vorgeschlagen, mit Hilfe mindestens eines Abgassensors das Abgas jedes Zylinders der Brennkraftmaschine individuell messtechnisch zu untersuchen und an dem Abgas jedes Zylinders mindestens einen Abgasistwert messtechnisch zu erfassen. Durch Vergleich des Abgasistwerts eines jeden Zylinders mit einem entsprechenden Abgassollwert kann detektiert werden, ob an dem jeweiligen Zylinder Zündaussetzer vorliegen. Mit Hilfe von Abgasistwerten, die am Abgas der Zylinder zylinderindividuell erfasst werden, können auch sporadische Zündaussetzer zuverlässig erkannt werden. Als Abgasistwerte werden an dem Abgas jedes Zylinders vorzugsweise eine NOx-Menge oder eine NOx-Konzentration oder ein Sauerstoffgehalt im Abgas mit Hilfe mindestens eines als NOx-Sensor oder eines als Lambda-Sensor ausgebildeten Abgassensors erfasst. Hiermit können sporadische Zündaussetzer besonders zuverlässig ermittelt werden. Als Abgassollwert für jeden Zylinder dient vorzugsweise der Abgasistwert der anderen Zylinder bzw. ein Mittelwert der Abgasistwerte der anderen Zylinder. Hiermit ist eine besonders einfache und zuverlässige Detektion sporadischer, zylinderindividueller Zündaussetzer möglich.

Vorzugsweise wird dann, wenn an einem Zylinder Zündaussetzer vorliegen, eine Kraftstoffzufuhr zu diesem Zylinder unterbrochen und/oder ein Zündzeitpunkt an diesem Zylinder beeinflusst und/oder ein Kraftstoff/Luft-Verhältnis an diesem Zylinder beeinflusst. Mit diesen Maßnahmen kann einer Beschädigungsgefahr des Abgasnachbehandlungssystems infolge von Zündaussetzern entgegengewirkt werden.

Nach einer ersten vorteilhaften Weiterbildung der Erfindung wird für jeden Zylinder der oder jeder Abgasistwert mit Hilfe mindestens eines zylinderindividuellen Abgassensors messtechnisch erfasst, wobei an dem jeweiligen Abgassensor des jeweiligen Zylinders der jeweilige Abgasistwert ausschließlich in einem zylinderindividuellen Kurbelwellenwinkelbereich erfasst wird, um bei der zylinderindividuellen Abgasistwert-Erfassung eine Wechselwirkung mit dem von anderen Zylindern ausgestoßenem Abgas zu minimieren.

Nach einer zweiten, alternativen vorteilhaften Weiterbildung der Erfindung wird für mehrere Zylinder der oder jeder Abgasistwert mit Hilfe eines gemeinsamen Abgassensors messtechnisch erfasst, wobei dem gemeinsamen Abgassensor mehrerer Zylinder periodisch das Abgas immer ausschließlich eines Zylinders zugeführt wird, um bei der zylinderindividuellen Abgasistwert-Erfassung eine Wechselwirkung mit dem von anderen Zylindern ausgestoßenem Abgas zu minimieren.

Sowohl die erste vorteilhafte Weiterbildung der Erfindung als auch die zweite, alternative vorteilhafte Weiterbildung der Erfindung erlauben eine exakte messtechnische Bestimmung zylinderindividueller Abgasistwerte, insbesondere der Abgaskonzentrationswerte, und zwar ohne die Gefahr, dass die an dem Abgas eines Zylinders vorgenommene messtechnische Erfassung eines Abgasistwerts durch eine Wechselwirkung mit dem von anderen Zylindern ausgestoßenen Abgas beeinträchtigt wird.

Nach einer weiteren vorteilhaften Weiterbildung der Erfindung wird als Abgasistwert für jeden Zylinder ein NOx-Istwert mit Hilfe eines als NOx-Sensor ausgebildeten Abgassensors erfasst. Zusätzlich oder alternativ wird als Abgasistwert für jeden Zylinder ein Kraftstoff/Luft-Verhältnis bzw. Restsauerstoffgehalt mit Hilfe eines als Lambda-Sensor ausgebildeten Abgassensors erfasst. Die messtechnische Erfassung der zylinderindividuellen Abgasistwerte über NOx-Sensoren oder Lambda-Sensoren ist bevorzugt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte Darstellung einer Brennkraftmaschine zur Verdeutlichung des erfindungsgemäßen Verfahrens; und
- Fig. 2:: eine schematisierte Darstellung einer weiteren Brennkraftmaschine zur Verdeutlichung des erfindungsgemäßen Verfahrens.

Die Erfindung betrifft ein Verfahren zum Betreiben einer Brennkraftmaschine, nämlich ein Verfahren zur zylinderindividuellen Detektion von Zündaussetzern an den Zylindern einer Brennkraftmaschine, insbesondere an einem als Gasmotor ausgebildeten Schiffsmotor.

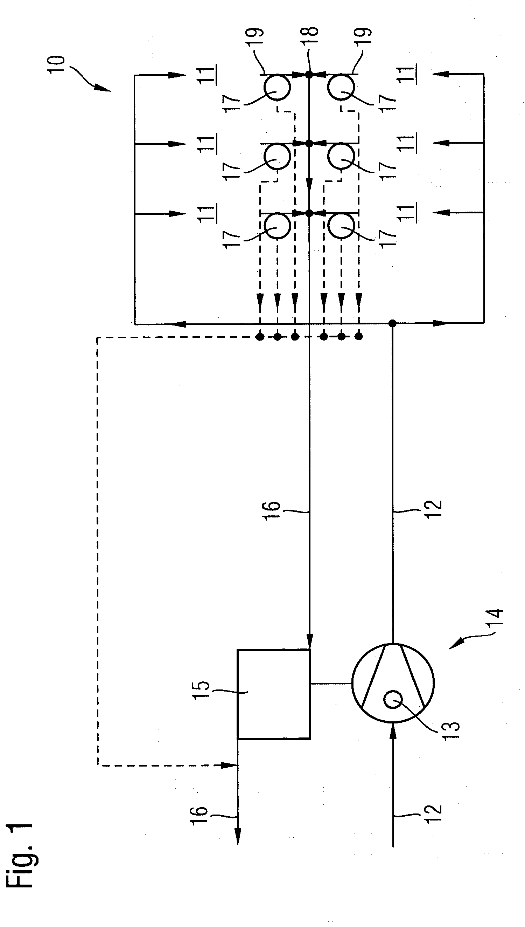

Fig. 1 zeigt stark schematisiert ein Schema einer Brennkraftmaschine 10 mit mehreren Zylindern 11. Die in Fig. 1 gezeigte Anzahl von sechs Zylindern 11 sowie die Gruppierung dieser Zylinder 11 in zwei Zylindergruppen ist rein exemplarischer Natur.

Den Zylindern 11 der Brennkraftmaschine 10 kann, ausgehend von einer Ladeluftleitung 12, Ladeluft zugeführt werden, wobei im gezeigten Ausführungsbeispiel der Fig. 1 die Ladeluft in einem Verdichter 13 eines Abgasturboladers 14 verdichtet wird. Hierzu benötigte Energie wird in einer Turbine 15 des Abgasturboladers dadurch gewonnen, dass in der Turbine 15 Abgas, welches die Zylinder 11 der Brennkraftmaschine 10 verlässt, entspannt wird. So kann der Turbine 15 des Abgasturboladers 14 das die Zylinder 11 verlassende Abgas über eine Abgasleitung 16 zugeführt werden. Das Vorhandensein eines solches Abgasturboladers 14 ist zwar bevorzugt, jedoch optional. Stromabwärts der Turbine 15 des Abgasturboladers 14 ist ein nicht gezeigtes Abgasnachbehandlungssystem vorhanden.

Im Sinne der hier vorliegenden Erfindung wird vorgeschlagen, an einer Brennkraftmaschine 10 eine zylinderindividuelle Detektion von Zündaussetzern zu etablieren, wobei hierzu mit Hilfe mindestens eines Abgassensors 17 an dem Abgas jedes Zylinders 11 für den jeweiligen Zylinder 11 individuell mindestens ein Abgasistwert messtechnisch erfasst wird. Dieser jeweilige messtechnisch erfasste Abgasistwert des jeweiligen Zylinders 11 wird mit einem entsprechenden Abgassollwert verglichen, um für den jeweiligen Zylinder eine zylinderindividuelle Abweichung zwischen dem Abgassollwert und dem messtechnisch erfassten Abgasistwert zu ermitteln. Auf Grundlage dieser zylinderindividuellen Abweichung wird dann für jeden Zylinder 11 individuell bestimmt wird, ob am jeweiligen Zylinder Zündaussetzer vorliegen.

Gemäß der Fig. 1 ist jedem Zylinder 11 der Brennkraftmaschine 10 ein individueller Abgassensor 17 zugeordnet. Jeder zylinderindividuelle Abgassensor 17 ist in Strömungsrichtung des Abgases gesehen stromabwärts des jeweiligen Zylinders 11 und stromaufwärts einer Vereinigungsstelle 18 eines zylinderindividuellen Abgasauslasskanals 19 mit der Abgasleitung 16 angeordnet. Es ist auch möglich, dass die Abgassensoren 17 in Brennräume der Zylinder 11 hineinragen.

Im Bereich jedes zylinderindividuellen Abgassensors 17 wird das Abgas des jeweiligen Zylinders 11 einer zylinderindividuellen messtechnischen Erfassung unterzogen, um so für jeden Zylinder 11 mindestens einen zylinderindividuellen Abgasistwert zu ermitteln. Dabei ist vorgesehen, dass an dem jeweiligen Abgassensor 17 des jeweiligen Zylinders 11 der jeweilige Abgasistwert ausschließlich in einem zylinderindividuellen Kurbelwinkelwellenbereich erfasst wird, um bei der zylinderindividuellen Erfassung der Abgasistwerte eine Wechselwirkung mit dem von anderen Zylindern ausgestoßenen Abgas zu minimieren oder angängig von Ventilüberscheidungen der Auslassventile gar vollständig zu vermeiden.

Da die Auslassventile der einzelnen Zylinder 11 in unterschiedlichen Kurbelwellenwinkelbereichen öffnen und demnach Abgas aus den jeweiligen Zylindern 11 in unterschiedlichen Kurbelwellenwinkelbereichen abführen, kann so vermieden werden, dass bei der Erfassung zylinderindividueller Abgasistwerte das Abgas anderer Zylinder diese Istwert-Erfassung beeinträchtigt.

Gemäß Fig. 1 wird das über die zylinderindividuellen Abgassensoren 17 geleitete Abgas in Strömungsrichtung des Abgases gesehen stromabwärts der Turbine 15 in die Abgasleitung 16 geleitet. Dies hat den Vorteil, dass aufgrund des Druckgefälles über den Turbolader stetig Abgas von den einzelnen Zylindern über die Abgassensoren in Richtung stromab der Abgasturbine strömt. Die Ausführungsform der Fig. 1 ist zur Gewährleistung einer hinreichenden Genauigkeit der zylinderselektiven Detektion von Zündaussetzern bei relativ schnell laufenden Brennkraftmaschinen bevorzugt.

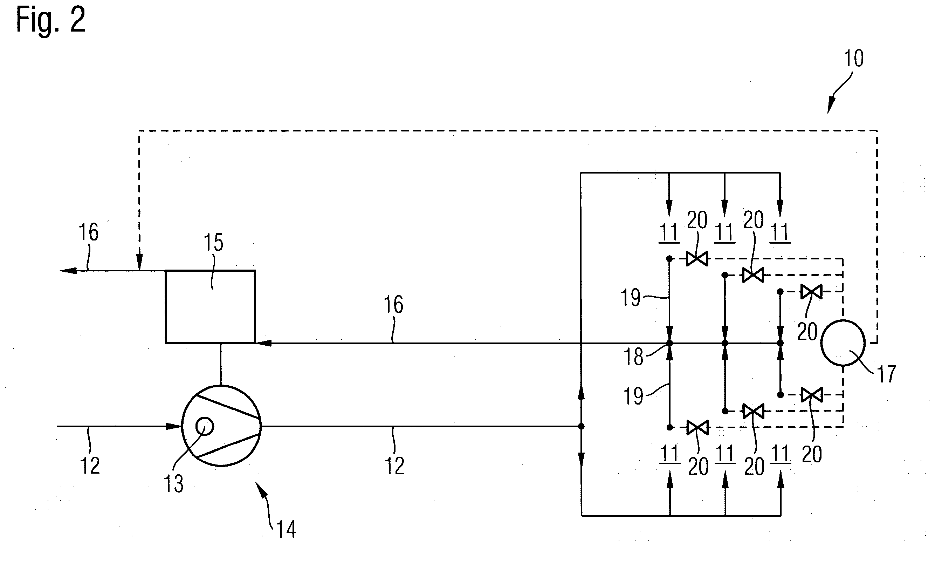

Fig. 2 zeigt eine alternative Ausgestaltung, bei welcher zur Ermittlung der zylinderindividuellen Abgasistwerte für die Zylinder 11 ein gemeinsamer Abgassensor 17 vorhanden ist. Dieser Abgassensor 17 ist jeweils mit den zylinderindividuellen Abgasauslasskanälen 19 unter Zwischenschaltung von Ventilen 20 gekoppelt, um so dem gemeinsamen Abgassensor 17 das Abgas immer ausschließlich eines Zylinders 11 zuzuführen. Die Ansteuerung der Ventile 20 erfolgt dabei wiederum abhängig vom zylinderindividuellen Kurbelwinkelwellenbereich, um dann, wenn die Auslassventile des jeweiligen Zylinders 11 Abgas ausstoßen, durch Öffnung des diesem Zylinder 11 zugeordneten Ventils 20 Abgas des jeweiligen Zylinders 11 dem gemeinsamen Abgassensor 17 zuzuführen. Auch im Ausführungsbeispiel der Fig. 2 wird das über den gemeinsamen Abgassensor 17 geführt Abgas stromabwärts der Turbine 15 des Abgasturboladers 14 in die Abgasleitung 16 geleitet.

Die Ausführungsform der Fig. 2 ist bei relativ langsam laufenden Brennkraftmaschinen bevorzugt. Bei relativ langsam laufenden Brennkraftmaschinen kann in Folge der geringen Frequenzen der Abgasausschiebetakte der einzelnen Zylinder auch mit einem einzigen Abgassensor eine hinreichende Genauigkeit der zylinderselektiven Detektion von Zündaussetzern gewährleistet werden.

Bei der Istwert-Erfassung können in den Varianten der Fig. 1 und 2 Laufzeiten des Abgases von den Zylindern 11 zu den Abgassensoren 17 berücksichtigt werden.

Bei den zylinderindividuellen Abgassensoren 17 der Fig. 1 bzw. beim gemeinsamen Abgassensor 17 der Fig. 2, die jeweils zur zylinderindividuellen Ermittlung eines Abgasistwerts verwendet werden, handelt es sich vorzugsweise um NOx-Sensoren und/oder um Lambda-Sensoren handeln. Dann, wenn in Fig. 1 als Abgassensoren 17 NOx-Sensoren und in Fig. 2 als gemeinsamer Abgassensor ein NOx-Sensor zum Einsatz kommt, werden als zylinderindividuelle Abgasistwerte NOx-Istwerte ermittelt, wobei sowohl NOx-Konzentrationen als auch NOx-Mengen ermittelt werden können. Dann, wenn als Abgassensoren 17 in Fig. 1 bzw. als gemeinsamer Abgassensor 17 in Fig. 2 ein Lambda-Sensor verwendet wird, werden als zylinderindividuelle Abgasistwerte vorzugsweise Kraftstoff/Luft-Verhältnisse bzw. Restsauerstoffgehalte ermittelt.

Obwohl die Verwendung NOx-Sensoren bzw. Lambda-Sensoren bevorzugt ist, können als Abgassensoren auch CH₄-Sensoren oder H₂-Sensoren oder Rußsensoren in Zusammenhang mit der zylinderselektiven Detektion von Zündaussetzern verwendet werden.

Bei der messtechnischen Ermittlung der Abgasistwerte ist es möglich, entweder den aktuellen Messwert des Abgasistwerts zu verwenden, oder aus über ein Messintervall erfassten Messwerten des Abgasistwerts einen Mittelwert oder einen Maximalwert oder ein zeitliches Integral zu ermitteln und diese Größe dann als zylinderindividuellen Abgasistwert zu verwenden. Ebenso ist es möglich, innerhalb eines Messintervalls einen Wendepunkt als zylinderindividuellen Abgasistwert zu verwenden. Bei relativ schnell laufenden Brennkraftmaschinen ist die Verwendung von Mittelwerten als Abgasistwerte bevorzugt. Bei relativ langsam laufenden Brennkraftmaschinen ist die Verwendung von Maximalwerten oder zeitlichen Integralen oder Wendepunkten als Abgasistwerte bevorzugt.

Es können für jeden Zylinder 11 auch mehrere Abgasistwerte ermittelt werden, um dieselben mit entsprechenden Abgassollwerten zu vergleichen und um abhängig hiervon die zylinderindividuellen Detektion von Zündaussetzern vorzunehmen.

Hierbei können NOx-Istwerte in Kombination mit Istwerten des Restsauerstoffgehalts bzw. Kraftstoff/Luft-Verhältnisses ermittelt und mit entsprechenden Sollwerten verglichen werden. In diesem Zusammenhang können NOx-Sensoren und Lambda-Sensoren eine nicht zerstörungsfrei trennbare Einheit bilden.

Nach einer weiteren vorteilhaften Weiterbildung der Erfindung ist vorgesehen, dass als Abgassollwerte für die Zylinder 11 der Brennkraftmaschine 10 Abgassollwerte verwendet werden, die vom Betriebspunkt der Brennkraftmaschine 10 abhängig sind. So ist es möglich, für einen Volllastbetrieb und einen Teillastbetrieb der Brennkraftmaschine 10 unterschiedliche Abgassollwerte für die Zylinder 11 der Brennkraftmaschine 10 bereitzuhalten.

Als Abgassollwert für einen Zylinder finden vorzugsweise die Abgasistwerte der anderen Zylinder Verwendung. So ist es zum Beispiel möglich, als Abgassollwert für einen Zylinder einen Mittelwert der Abgasistwerte der anderen Zylinder zu verwenden. Ist für einen Zylinder eine gravierende Abweichung zwischen dem jeweiligen Abgasistwert und dem jeweiligen Abgassollwert festzustellen, die größer als ein Grenzwert ist, so ist an diesem Zylinder von Zündaussetzern auszugehen.

Dann, wenn an einem Zylinder einer Brennkraftmaschine auf das Vorliegen zylinderselektiver Zündaussetzer erkannt wird, wird das Ergebnis zumindest in einem Motorsteuergerät gespeichert, um bei einer nachfolgenden Wartung dieses Ergebnis auszulesen und entsprechende Wartungsmaßnahmen am jeweiligen Zylinder zu initiieren.

Nach einer vorteilhaften Weiterbildung der Erfindung ist vorgesehen, dass dann, wenn an einem Zylinder das Vorliegen von Zündaussetzern erkannt wird, für diesen Zylinder eine Kraftstoffzufuhr zum Zylinder unterbrochen wird und/oder ein Zündzeitpunkt an diesem Zylinder beeinflusst wird und/oder ein Kraftstoff/Luftverhältnis an diesem Zylinder beeinflusst wird. Hierdurch kann einer unzulässig großen Temperaturerhöhung im Bereich eines der Brennkraftmaschine 10 nachgelagerten Abgasnachbehandlungssystems entgegengewirkt werden.

Die Abgassensoren, die zur zylinderselektiven Detektion von Zündaussetzern zum Einsatz kommen, unterliegen im Betrieb einem Alterungsprozess, sodass sich eine Messkennlinie des jeweiligen Abgassensors über die Betriebsdauer verändert. Daher ist nach einer weiteren vorteilhaften Weiterbildung der Erfindung vorgesehen, den oder jeden Abgassensor zu kalibrieren.

Zu Beginn einer Kalibrierung eines Abgassensors wird sämtliches Abgas vom Abgassensor abgeführt, indem der jeweilige Abgassensor mit einem Referenzgas beaufschlagt wird. Während der Kalibrierung des jeweiligen Abgassensors wird derselbe weiterhin mit Referenzgas beaufschlagt, um zu vermeiden, dass derselbe während der Kalibrierung mit Abgas beaufschlagt wird. Nach erfolgter Kalibrierung kann dann der nun kalibrierte Abgassensor wieder mit Abgas beaufschlagt werden.

Bei einer Brennkraftmaschine mit Schubabschaltung, also bei einer Brennkraftmaschine, bei welcher im Schubbetrieb in den Zylindern derselben kein Kraftstoff verbrannt wird, können die Abgassensoren zur Kalibrierung mit Ladeluft beaufschlagt werden, wobei dann Ladeluft als Referenzgas verwendet wird. Der Sauerstoffgehalt der Ladeluft entspricht dem Sauerstoffgehalt der Umgebungsluft, sodass dann zum Beispiel Lambda-Sensoren einfach und zuverlässig unter Verwendung von Ladeluft als Referenzgas kalibriert werden können.

Dann, wenn ein zu kalibrierender Abgassensor in einem entsprechenden Messraum angeordnet ist, wird vor der Kalibrierung Abgas aus dem Messraum entfernt, indem der Messraum mit dem Referenzgas befüllt wird. Vorzugsweise wird, wie bereits ausgeführt, während der gesamten Kalibrierung kontinuierlich Referenzgas mit definiertem Druck in den Messraum nachgeführt, um so zu verhindern, dass während der Kalibrierung Abgas in den Messraum gelangt. Nach Beendigung der Kalibrierung kann dann wiederum Abgas direkt in den Messraum des jeweiligen Abgassensors eingeleitet werden, um das Referenzgas aus dem Messraum abzuführen und den Abgassensor wiederum zum eigentlichen Messbetrieb zu verwenden.

Dann, wenn der zu kalibrierende Abgassensor in einem Messraum positioniert ist, kann dieser Messraum zum Beispiel über eine gasdurchlässige Membran vom Abgaskanal abgeschirmt sein. Über eine zu dem Messraum führende Referenzgasleitung kann dann Kalibriergas in den Messraum eingeleitet werden, wobei im Messraum befindliches Abgas durch die gasdurchlässige Membran in den Abgaskanal verdrängt wird. Während der Kalibrierung wird vorzugsweise stetig eine definierte Menge an Kalibriergas in den Messraum geleitet, um sicherzustellen, dass über die Membran kein Abgas in den Messraum gelangt. Nach Beendigung der Kalibrierung wird die Zufuhr von Kalibriergas über die Referenzgasleitung gestoppt, sodass dann durch die gasdurchlässige Membran wieder Abgas in den Messraum eindringen kann, um dann wieder den Abgassensor für den normalen Messbetrieb einzusetzen. Um hierbei ein beschleunigtes Eindringen von Abgas in den Messraum des jeweiligen Abgassensors sicherzustellen, kann über die zum jeweiligen Messraum führende Referenzgasleitung das Referenzgas aus dem jeweiligen Messraum abgesaugt werden. Es kann auch eine separate Saugleitung vorhanden sein, um das Referenzgas aus dem Messraum des jeweiligen Sensors abzusaugen. Ein solcher Absaugvorgang für das Referenzgas kann gesteuert erfolgen, zum Beispiel über eine ohnehin vorhandene Saugleitung eines Motoransaugsystems in Kombination mit einem steuerbaren Ventil in einer zum jeweiligen Messraum des jeweiligen Abgassensors führenden Saugleitung.

### Bezugszeichenliste

- 10: Brennkraftmaschine
- 11: Zylinder
- 12: Ladeluftleitung
- 13: Verdichter
- 14: Abgasturbolader
- 15: Turbine
- 16: Abgasleitung
- 17: Abgassensor
- 18: Vereinigungsstelle
- 19: Abgasauslasskanal
- 20: Ventil

## Patentansprüche

1. Verfahren zum Betreiben einer Brennkraftmaschine (10) mit mehreren Zylindern (11), nämlich Verfahren zur zylinderindividuellen Detektion von Zündaussetzern, wobei mit Hilfe mindestens eines Abgassensors (17) an dem Abgas jedes Zylinders (11) der Brennkraftmaschine (10) für den jeweiligen Zylinder (11) individuell mindestsens ein Abgasistwert messtechnisch erfasst wird und der jeweilige messtechnisch erfasste Abgasistwert mit einem Abgassollwert, der vom Abgasistwert mindestens eines anderen Zylinders (11) abhängig ist, verglichen wird, um für jeden der Zylinder (11) mindestens eine zylinderindividuelle Abweichung zwischen dem Abgassollwert und dem Abgasistwert zu ermitteln, und wobei für jeden Zylinder (11) auf Grundlage der oder jeder zylinderindividuellen Abweichung individuell bestimmt wird, ob am jeweiligen Zylinder Zündaussetzer vorliegen, wobei als Abgasistwert für jeden Zylinder (11) ein NOx-Istwert mit Hilfe eines als NOx-Sensor ausgebildeten Abgassensors und/oder ein Kraftstoff/Luft-Verhältnis bzw. Restsauerstoffgehalt mit Hilfe eines als Lambda-Sensor aus-gebildeten Abgassensors erfasst wird und der Abgassollwert eines Zylinders (11) ein Mittelwert der vom Abgasistwerte mindestens eines der anderen Zylinder (11) abhängig ist, wobei zur Kalibrierung des jeweiligen Abgassensors (17) der jeweilige Abgassensor (17) mit einem Referenzgas beaufschlagt wird, um Abgas vom jeweiligen Abgassensor (17) abzuführen, wobei
die Kalibrierung auf Basis eines unter Beaufschlagung des jeweiligen Abgassensors (17) mit Referenzgas gewonnenen Messwerts erfolgt, und wobei
nach der Kalibrierung der jeweilige Abgassensor (17) wieder mit Abgas beaufschlagt wird.

2. Verfahren nach Anspruch 1, **dadurch gekennzeichnet, dass** für jeden Zylinder (11) der oder jeder Abgasistwert mit Hilfe mindestens eines zylinderindividuellen Abgassensors (17) messtechnisch erfasst wird.

3. Verfahren nach Anspruch 2, **dadurch gekennzeichnet, dass** an dem jeweiligen Abgassensor (17) des jeweiligen Zylinders (11) der jeweilige Abgasistwert ausschließlich in einem zylinderindividuellen Kurbelwellenwinkelbereich erfasst wird, um bei der zylinderindividuellen Abgasistwert-Erfassung eine Wechselwirkung mit dem von anderen Zylindern (11) ausgestoßenem Abgas zu minimieren.

4. Verfahren nach Anspruch 1, **dadurch gekennzeichnet, dass** für mehrere Zylinder (11) der oder jeder Abgasistwert mit Hilfe eines gemeinsamen Abgassensors (17) messtechnisch erfasst wird.

5. Verfahren nach Anspruch 4, **dadurch gekennzeichnet, dass** dem gemeinsamen Abgassensor (17) mehrerer Zylinder (11) das Abgas immer ausschließlich eines Zylinders (11) zugeführt wird, um bei der zylinderindividuellen Abgasistwert-Erfassung eine Wechselwirkung mit dem von anderen Zylindern (11) ausgestoßenem Abgas zu minimieren.

6. Verfahren nach einem der Ansprüche 1 bis 5, **dadurch gekennzeichnet, dass** als Abgasistwert der aktuelle Messwert des jeweiligen Abgassensors (17) Verbrennungsistwerts verwendet wird.

7. Verfahren nach einem der Ansprüche 1 bis 5, **dadurch gekennzeichnet, dass** als Abgasistwert aus über ein Messintervall erfassten Messwerten des jeweiligen Abgassensors (17) ein Mittelwert oder ein Maximalwert oder ein zeitliches Intergral oder ein Wendepunkt verwendet wird.

8. Verfahren nach einem der Ansprüche 1 bis 7, **dadurch gekennzeichnet, dass** dann, wenn an einem Zylinder (11) Zündaussetzer vorliegen, eine Kraftstoffzufuhr zu diesem Zylinder (11) unterbrochen wird und/oder ein Zündzeitpunkt an diesem Zylinder (11) beeinflusst wird und/oder ein Kraftstoff/LuftVerhältnis an diesem Zylinder (11) beeinflusst wird.

## Claims

1. Method of operating an internal combustion engine (10) with several cylinders (11), namely a method for the cylinder-specific detection of ignition misfires, with the aid of at least one exhaust gas sensor (17) the exhaust gas from of each cylinder (11) of the internal combustion engine (10) for the respective cylinder (11) at least one exhaust gas value is individually measured for the respective cylinder (11), and the respective measured actual value of the exhaust gas is compared with an exhaust gas setpoint value, which is dependent on the exhaust gas actual value of at least one other cylinder (11), in order to determine for each of the cylinders (11) at least one cylinder-specific deviation between the exhaust gas setpoint value and the actual exhaust-gas value and wherein for each cylinder (11), on the basis of the deviation or each cylinder-individual deviation, it is determined individually whether misfires are present at the respective cylinder, wherein the actual exhaust gas value for each cylinder (11) is an actual NOx value which is measured by an NOx sensor and/or a fuel/air ratio or residual oxygen content measured by a lambda sensor, and the exhaust gas setpoint of a cylinder (11) is an average value of the exhaust gas actual values of at least one of the other cylinders (11), whereby for the calibration of the respective exhaust gas sensor (17), the respective exhaust gas sensor (17) is exposed to a reference gas, wherein the calibration is carried out on the basis of a reference gas sensor (17) with reference gas, wherein the calibration is carried out on the basis of a measured value and wherein, after calibration, the respective exhaust gas sensor (17) is again exposed to exhaust gas.

2. Method according to claim 1, **characterized in that**, for each cylinder (11), the exhaust gas value or each exhaust gas value is measured with the aid of at least one cylinder-individual exhaust gas sensor (17).

3. Method according to claim 2, **characterized in that** at the respective exhaust gas sensor (17) of the respective cylinder (11), the respective exhaust gas value is measured exclusively in a cylinder-specific crankshaft angle range in order to minimize an interaction with the exhaust gas emitted by other cylinders (11).

4. Method according to claim 1, **characterized in that** for several cylinders (11) the exhaust gas value or each exhaust gas value is measured with the aid of a common exhaust gas sensor (17).

5. Method according to claim 4, **characterized in that** the exhaust of only one individual cylinder (11) is directed to the common exhaust gas sensor (17) which is assigned to a plurality of cylinders (11) to prevent interaction with the exhaust gas orginating for other cylinders (11) during the cylinder-specific exhaust gas value detection.

6. Method according to any one of claims 1 to 5, **characterized in that** the actual exhaust gas value used is the current measured value of the respective exhaust gas sensor (17) actual combustion value.

7. Method according to any one of claims 1 to 5, **characterized in that** the actual exhaust gas value is either a mean value or a maximum value or an integral or an inflection point selected from measured values of the respective exhaust gas sensor (17) recorded over a measurement interval.

8. Method according to any one of claims 1 to 7, **characterized in that** if misfires are present at a cylinder (11), a fuel supply to this cylinder (11) is interrupted and/or an ignition timing point at this cylinder (11) is being changed and/or a fuel/air ratio at this cylinder (11) is being changed.

## Revendications

1. Procédé de fonctionnement d'un moteur à combustion interne (10) avec plusieurs cylindres (11), à savoir procédé de détection individuelle de cylindres de ratés d'allumage, dans lequel, à l'aide d'au moins un capteur de gaz d'échappement (17), au moins une valeur réelle de gaz d'échappement est détectée par une technique de mesure sur les gaz d'échappement de chaque cylindre (11) du moteur à combustion interne (10) pour le cylindre (11) respectif et la valeur réelle de gaz d'échappement respective détectée par une technique de mesure est comparée à une valeur de consigne de gaz d'échappement, qui dépend de la valeur réelle des gaz d'échappement d'au moins un autre cylindre (11), afin de déterminer pour chacun des cylindres (11) au moins un écart individuel par cylindre entre la valeur de consigne des gaz d'échappement et la valeur réelle des gaz d'échappement, et dans lequel on détermine individuellement pour chaque cylindre (11), sur la base de l'écart ou de chaque écart individuel du cylindre, si des ratés d'allumage sont présents sur le cylindre respectif, dans lequel une valeur réelle de NOx étant saisie comme valeur réelle de gaz d'échappement pour chaque cylindre (11) à l'aide d'un capteur de gaz d'échappement réalisé comme capteur de NOx et/ou un rapport carburant/air respectivement une teneur résiduelle en oxygène étant saisie à l'aide d'un capteur de gaz d'échappement réalisé comme capteur lambda et la valeur de consigne de gaz d'échappement d'un cylindre (11) étant une valeur moyenne qui dépend de la valeur de gaz d'échappement d'au moins un des autres cylindres (11), dans lequel, pour le calibrage du capteur de gaz d'échappement (17) respectif, le capteur de gaz d'échappement (17) respectif est exposé à un gaz de référence pour faire sortir les gaz d'échappement du capteur de gaz d'échappement (17) respectif, dans lequel le calibrage est effectué sur la base d'une valeur de mesure obtenue en soumettant le capteur de gaz d'échappement (17) respectif à un gaz de référence, et dans lequel, après le calibrage, le capteur de gaz d'échappement (17) respectif est à nouveau soumis à un gaz d'échappement.

2. Procédé selon la revendication 1, **caractérisé en ce que**, pour chaque cylindre (11), la valeur des gaz d'échappement ou chaque valeur des gaz d'échappement est mesurée à l'aide d'au moins un capteur de gaz d'échappement (17) individuel au cylindre.

3. Procédé selon la revendication 2, **caractérisé en ce que** sur le capteur de gaz d'échappement respectif (17) du cylindre respectif (11), la valeur réelle de gaz d'échappement respective est détectée exclusivement dans une plage d'angles de vilebrequin individuelle au cylindre, pour minimiser une interaction avec les gaz d'échappement émis par d'autres cylindres (11) pendant la détection individuelle au cylindre de la valeur réelle de gaz d'échappement.

4. Procédé selon la revendication 1, **caractérisé en ce que**, pour plusieurs cylindres (11), la ou chaque valeur réelle de gaz d'échappement est saisie par une technique de mesure à l'aide d'un capteur de gaz d'échappement (17) commun.

5. Procédé selon la revendication 4, **caractérisé en ce que** le capteur de gaz d'échappement (17) commun à plusieurs cylindres (11) est toujours alimenté en gaz d'échappement d'un cylindre (11) exclusivement, pour minimiser une interaction avec les gaz d'échappement émis par d'autres cylindres (11) lors de la détection individuelle des cylindres de la valeur réelle des gaz d'échappement.

6. Procédé selon l'une quelconque des revendications 1 à 5, **caractérisé en ce que** la valeur réelle des gaz d'échappement est la valeur de mesure actuelle du capteur de gaz d'échappement (17) respectif.

7. Procédé selon l'une des revendications 1 à 5, **caractérisé en ce que** l'on utilise comme valeur réelle des gaz d'échappement une valeur moyenne ou une valeur maximale ou un intervalle de temps ou un point d'inflexion à partir de valeurs de mesure du capteur de gaz d'échappement (17) respectif saisies sur un intervalle de mesure.

8. Procédé selon l'une des revendications 1 à 7, **caractérisé en ce que**, si des ratés d'allumage sont présents sur un cylindre (11), une alimentation en carburant vers ce cylindre (11) est interrompue et/ou un moment d'allumage sur ce cylindre (11) est influencé et/ou un rapport carburant/air sur ce cylindre (11) est influencé.
